Europäisches Patentamt

European Patent Office

Office européen des brevets

(11) Veröffentlichungsnummer: **0 263 505**
**A1**

## (12) EUROPÄISCHE PATENTANMELDUNG

(21) Anmeldenummer: 87114620.5

(22) Anmeldetag: 07.10.87

(51) Int. Cl.⁴: **F16L 55/16**

(30) Priorität: 07.10.86 DE 3634145

(43) Veröffentlichungstag der Anmeldung:
**13.04.88 Patentblatt 88/15**

(84) Benannte Vertragsstaaten:
**AT BE CH DE ES FR GB GR IT LI LU NL SE**

(71) Anmelder: **Zawisla GmbH & Co. KG**
**Rohr- und Kanalreinigungsservice**
**Industriestrasse 3**
**D-6729 Hatzenbühl(DE)**

(72) Erfinder: **Zawisla, Klaus**
**Raiffeisenring 6**
**D-6729 Hatzenbühl(DE)**
Erfinder: **Schubert, Uwe**
**Haberbitz 26**
**D-5300 Bonn 3(DE)**

(74) Vertreter: **Görg, Klaus, Dipl.-Ing. et al**
**Hoffmann, Eitle & Partner Arabellastrasse 4**
**(Sternhaus)**
**D-8000 München 81(DE)**

(54) **Verfahren und Vorrichtung zum Sanieren oder Beschichten von Rohren sowie Sanierungs- oder Beschichtungsmaterial.**

(57) Die Erfindung bezieht sich auf eine Vorrichtung und ein Verfahren zum Sanieren einer Kanal-Rohrleitung (41), insbesondere durch kontinuierliches, gleichmäßiges Aufspachteln eines bestimmten Sanierungsmaterials, so daß ein "Rohr im Rohr" besteht.

FIG. 1

## Verfahren und Vorrichtung zum Sanieren oder Beschichten von Rohren sowie Sanierungs-oder Beschichtungsmaterial

Die Sanierung von Abwasserkanälen findet zunehmende Bedeutung und bedarf einer grundsätzlichen Weiterentwicklung. Hierfür haben sich bisher verschiedene Maßnahmen angeboten.

Einerseits hat man die alten Kanalrohre durch neue ersetzt. Dies ist jedoch mit einem außerordentlich hohen Kostenaufwand verbunden und kommt häufig wegen organisatorischen Hemmnissen, wie z.B. einer geänderten Verkehrsführung o.dgl. nicht in Betracht.

Eine andere bekannte Maßnahme der Sanierung, die in den 60er Jahren aus England übernommen wurde, ist das sogenannte Relining. Bei dieser Methode wird ein faserverstärktes Weich-PVC, Acrylate und Epoxidharze nach dem Strumpfprinzip in den Kanal eingezogen. Diese Methode zeigt lediglich in statisch noch ausreichend bemessenen Leitungssystemen dauerhafte Erfolge. Im Laufe der Zeit stellten sich auch hier Schwierigkeiten ein, und zwar hinsichtlich der Einbruchgefahr, der Wurzelfestigkeit oder der Chemikalienbeständigkeit. Das Weich-PVC und das vorgenannte Material versprödet mit der Zeit und schon nach 6 bis 8 Jahren sind derartige Systeme, je nach Belastung, unbrauchbar. Dennoch wird diese Methode, die sehr kostenaufwendig ist, in Ermangelung anderer Technologien noch angewandt.

Eine weitere bekannte Maßnahme zur Kanalsanierung besteht in der Behandlung mit einem Acrylharzsystem. Diese Behandlung entstammt dem Prinzip der Bodenverfestigung. Derartige Acrylharzsysteme haben vorwiegend thioxotrope Eigenschaften und sind zur Verfestigung eigentlich nicht geeignet. Hinzu kommt, daß Teile der Reaktionsträger stark oxidativ sind, also korrosionsfördernd. Ebenso müssen, je nach Bodenqualität, hochgiftige Katalysatoren zugesetzt werden. Hinzu kommt, daß die Reaktion schlagartig beginnt und deren enorme Exothermität zu Verformungen innerhalb der thermischen Ausdehnungsbereiche führt. Außerdem müssen große Mengen injiziert werden, um eine Mindestfunktionalität zu erreichen. Für eine auf längere Sicht geplante Abdichtung sind derartige Maßnahmen dann auch nicht mehr wirtschaftlich. Zudem können solche Systeme, wenn überhaupt, nur bedingt, zur Abdichtung von Muffen oder Rissen verwendet werden. Eine eigentliche zufriedenstellende Sanierung läßt sich hiermit nicht durchführen.

Eine vierte bekannte Sanierungsmaßnahme besteht im Schleuderspritzen mit einem PCC-Mörtel. Eigentlich ist diese Methode des Schleuderspritzens mit einem Polymer-Zement-Beton der Betontechnologie entnommen. Bei einem solchen System handelt es sich um eine einfache Kombination aus Portland-Zement/Quarzsand und u.U. einem reemulgierbaren Dispersionspulver auf der Basis eines Vinylversatates oder Polyvinylacetates. Nachweislich sind die Sieblinien des Quarzsandes sowie das Schwindungsverhalten nicht auf den Endzweck ausgerichtet. So lösen sich derartige Systeme einheitlich von der Rohrwandung ab. Die aus der Sieblinie sowie aus dem Applikationsmechanismus resultierende Oberflächentextur trägt nicht zur Erniedrigung des Strömungswiderstandes bei. Vielmehr wird dieser durch die rauhe Oberfläche stark erhöht. Es entstehen turbulente Rohrströmungen, die schließlich zu Ablagerungen führen, was wiederum zu einer Querschnittsverringerung und konsequenterweise auch zu einem Verschluß des Querschnitts führen kann.

Diese Applikationstechnik ist auch nicht auf Einläufe, Ausgleiche, Ausbrüche und glatte Oberflächen abgestimmt. Man bedient sich hier der üblichen Putzmaschinen und des normalen Naßspritzverfahrens mit erweitertem Querschnitt. Dies führt dazu, daß das Material mit einem zu hohen Druck, sowie mit einem zu hohen Luftporen-und Bindemittelanteil angepreßt wird. Diese Iteration führt zu den obengenannten negativen Eigenschaften. Die Glättung erfolgt durch Bürsten. Hinzu kommt, daß für verschiedene Querschnitt nicht kontinuierlich mit einem Gerät gearbeitet werden kann. Außerdem ist eine gleichmäßige Materialauftragstärke nicht erzielbar, was zu Verformungen des Querschnitts führt. Einmündende Hausanschlüsse müssen vor der Behandlung bei diesem Verfahren verschlossen werden.

Ein weiteres Verfahren besteht in dem sogen. KATE-Sanierungssystem. Die dort beschriebene Maschine weist eine Vorrichtung zum Ausfüllen und Verleimen von Vertiefungen aller Art in einer nichtbegehbaren Rohrleitung auf, was mit einem ferngesteuerten Fahrzeug, mit einer Spachteleinrichtung zum Verstreichen des zum Auffüllen und Verleimen verwendeten Materials, sowie mit einer zum Auffinden der Vertiefung dienenden Fersehkamera erfolgt. Die Vertiefungen sind Ausbrüche oder Risse, wobei die letzteren nicht nur ausgefüllt werden; vielmehr soll das Material auch die Rißwände wieder belastbar miteinander verbinden, also verleimen.

Bei diesem Gerät befindet sich das zur Beschichtung notwendige Material in einer Art Kartusche, die von dem ferngesteuerten Fahrzeug im Rohr mitgeführt wird. Dies bedeutet, daß das Material nicht oberirdisch zugeführt werden kann. Daraus resultiert, daß die mitzuführende Materialmenge zu gering ist, um kostengünstig die Arbeiten durchzuführen.

Aus der EP-PS 0 025 204 ist ein Verfahren und eine Vorrichtung zum Abdichten einer undichten Stelle in einer nichtbegehbaren Rohrleitung bekannt. In dieser Druckschrift wird auch auf die US-PS 2 894 539 hingewiesen. In dieser US-Patentschrift ist eine Einrichtung beschrieben, die in eine Rohrleitung eingeführt wird und in der Lage ist, eine defekte Stelle ferngesteuert auszubessern. Hierbei wird zuerst diese Stelle lokalisiert, dann das mitgeführte Dichtungsmittel aufgespritzt und mittels rotierender Lappen am Rohrumfang verstrichen, wobei es dann aushärtet. Im Zusammenhang mit der Lokalisierung ist es bekannt, dies mit einer Fernsehkamera vorzunehmen.

Das in der EP-PS 0 025 204 beschriebene Verfahren betrifft das Aufspüren einer schadhaften Stelle, das Ausbilden einer Bohrung durch die Rohrwand der Rohrleitung an der schadhaften Stelle oder in der Nähe davon, und das Hindurchleiten eines Dichtungsmittels unter Druck in das umgebende Erdreich. Das Dichtungsmittel besteht aus drei Komponenten, die getrennt von der Erdoberfläche zum durch die Rohrleitung ferngesteuert verfahrbaren Wagen geleitet und dort gemischt werden.

Durch die bisher bekannten Verfahren war eine zufriedenstellende Sanierung der gesamten Rohrleitung nicht möglich.

Die Kombination von Mörtel mit Kunststoffen ist grundsätzlich bekannt. So hat man schon Mörtel mit zahlreichen Kunststoffen, z.B. auch mit Epoxydharzen, kombiniert, um dadurch die mechanischen und/oder Verarbeitungseigenschaften des Mörtels vor und nach der Aushärtung zu modifizieren. Dies funktioniert jedoch nur, weil das Harz vom Typ Bisphenol-A (Epoxidharz) eine spezielle wasseremulgierbare Einstellung besitzt und die Reaktionsphase des Epoxidharzes derart verzögert ist, daß zuerst der mineralische Mörtel ausreagiert und dann erst die Reaktionsphase des Epoxidharzes beginnt.

Dies bedeutet, daß derartige Systeme für eine frühzeitige Belastung nicht geeignet sind.

Um eine wirksame Sanierung von Kanälen und Rohren durchzuführen, bietet sich eine Auskleidung der Innenwand der Kanäle und Rohre mit einem Zementmörtel an. Zementmörtel ist gut verarbeitbar und preiswert. Allerdings ist es eine wesentliche Voraussetzung für den Einsatz eines Zementmörtels bei der Kanalsanierung, daß der Zementmörtel maschinengängig ist, also maschinell aufgetragen werden kann, da sich ein Auftragen von Hand bei den meisten Kanälen und Rohrleitungen verbietet. Eine weitere Voraussetzung für einen Zementmörtel für den vorgesehenen Einsatzzweck ist darin zu sehen, daß er nach dem Aushärten den späteren Belastungsarten, insbesondere der Chemikalienbelastung, widerstehen kann. Weiterhin muß ein solcher Mörtel eine ausreichende Verarbeitbarkeitsdauer haben. Schließlich soll der Mörtel mit den herkömmlichen Kunstharzen, und hier besonders mit Exoxydharzen, voll verträglich sein. Zusammenfassend läßt sich somit die Forderung stellen, daß ein für die Kanalsanierung geeigneter Mörtel die maschinentechnischen Voraussetzungen erfüllen muß, also eine ausreichende Topfzeit und Maschinenbearbeitbarkeit und eine ausreichende Viskosität vor und nach dem Vermischen haben muß, und eine ausreichende Härte und Chemikalienbeständigkeit nach seiner Applikation aufweist. Verbunden mit diesen Eigenschaften ist auch die Notwendigkeit, auf feuchtem Untergrund zu haften, da eine vollständige Trockenlegung der zu sanierenden Kanäle häufig gar nicht möglich ist.

Die Aufgabe der Erfindung besteht darin, eine verbesserte Kanalsanierung durch ein geeignetes Verfahren mit einer geeigneten Vorrichtung und unter Einsatz eines geeigneten Materials sicherzustellen.

Diese Aufgabe wird gelöst durch ein Verfahren zum Sanieren einer nichtbegehbaren Rohrleitung durch Aufbringen eines Sanierungsmaterials, wobei auf die gesamte Rohrleitungsinnenwandfläche sukzessive und durch einen kontinuierlichen Vorgang das Sanierungsmaterial gleichmäßig auf die Rohrleitungsinnenwandfläche aufgespachtelt und geglättet wird.

Dabei wird bevorzugt das Sanierungsmaterial spiralförmig aufgespachtelt.

Dieses neuartige Verfahren hat zur Folge, daß ein "Rohr im Rohr" entsteht, welches einen homogenen Aufbau und eine hohe Festigkeit hat, also weitgehend unabhängig vom schadhaften Rohr ist, wenn das Sanierungsmaterial ausgehärtet ist. Dies liegt daran, daß auf sehr schonende Weise durch das Aufspachteln eine gleichmäßige Beschichtung erfolgt sowie die technischen Kenndaten des Sanierungsmörtels exakt vorgesteuert (d.h. programmiert) erzielt werden.

Durchgeführt wird dieses Verfahren erfindungsgemäß durch eine Vorrichtung mit einem in der Rohrleitung ferngesteuert verfahrbaren, einen Arbeitskopf und Zentriermittel aufweisenden Wagen, wobei am Arbeitskopf eine um die Rohrleitungslängsachse kontinuierlich drehbare Austrittsdüse für das Sanierungsmaterial angeordnet und diese Austrittsdüse einer Glättspachtel zugeordnet ist.

Dabei kann an der Austrittsdüse eine Auftragspachtel angeordnet sein, die an die Krümmung der Rohrleitungsinnenwandfläche angepaßt ist.

Mit einer derartigen Vorrichtung wird der Wagen langsam in einer Richtung durch die Rohrleitung verfahren, wobei sich der Arbeitskopf kontinuierlich dreht und somit über die Austrittsdüse das Sanierungsmaterial kontinuierlich auf die Innenwandfläche der Rohrleitung aufgetragen wird. Anschließend erfolgt ein Glättvorgang.

Um die Schichtdicke gleichmäßig zu halten, ist zur Steuerung der Auftragspachtel und/oder der Glättspachtel eine auf die aufgespachtelte und geglättete Auskleidung aufliegende Andrückrolle zugeordnet, die mit einem Sensor zusammenwirkt. Dieser Sensor erfaßt durch Bewegung der Andrückrolle Veränderungen der Schichtdicke und steuert daraufhin korrekturmäßig das Auftragen des Sanierungsmaterials und ggf. die Lage der Austrittsdüse bzw. der zugeordneten Auftragspachtel.

Durch die vielfachen Bewegungsmöglichkeiten der Bearbeitungswerkzeuge des Arbeitskopfes und des Arbeitskopfes selbst in den verschiedenen möglichen Kombinationen ist es möglich, exakt mit dem Arbeitskopf außer dem vorgenannten Auskleidungsverfahren die verschiedensten vorbereitenden Arbeiten durchzuführen, ohne daß der Wagen mehrmals aus der Rohrleitung herausgefahren und wieder neu eingesetzt werden muß. Der gesamte Sanierungsvorgang erfolgt mit einem einmaligen Einsetzen des Wagens in die Rohrleitung und durch verschiedene Manipulationen, die hinsichtlich des Feststellens von Fehlern durch eine Fernsehkamera gesteuert vollzogen werden.

Für die Kanalsanierung und insbesondere für die Auskleidung der Kanal-Rohrleitung wird vorzugsweise wahlweise Mörtel oder eine Epoxyharz-Zusammensetzung oder ein PU-Schaum für sich alleine oder in einer jeweiligen Kombination und untereinander in einer Zusammensetzung verwendet, wie sie im Anspruch 12 angegeben ist. Der Einsatz dieser Materialien für sich oder in Kombination, d.h. in Mischung, hängt von der jeweiligen Sanierungsart und von dem jeweiligen Sanierungsort ab. Es erfolgt mit diesen Materialien insbesondere das Auskleiden von Innenwänden von Kanälen und Rohrleitungen sowie das Verfüllen von Hohlräumen und das Abdichten von Undichtigkeiten (defekte Muffen oder dergleichen). Es kann aber auch bei der Herstellung insbesondere von Betonrohren eine Innenbeschichtung mit dem genannten Material erfolgen, wobei das Material auf den noch feuchten Beton aufgebracht wird. Dadurch werden die Betonrohre erstmals durch eine haltbare Beschichtung beständiger gegenüber dem darin geführten Materialien und stellen ein Produkt mit Eigenschaften von Steinzeugrohren dar.

Die erfindungsgemäß verwendete Zusammensetzung besteht somit aus den einzelnen Komponenten, aus zwei bzw. aus drei Komponenten, wobei die Komponenten A, nämlich der Mörtel, und B, das Epoxyharz (zusammen mit Verdünner und Härter), in bevorzugter Weise in der Mischung enthalten sind, während der PU-Schaum gegebenenfalls zu der Mischung zugegeben wird.

Jede Komponente kann aber auch für sich alleine eingesetzt werden.

Der PU-Schaum erfüllt dabei folgende Funktion:

Bei der Reaktion mit dem Überschußwasser aus dem Zementmörtel entsteht ein geschäumter Polyurethan-Zementmörtel, der zur Wiederherstellung der Statik in Hohlräume außerhalb der Rohrleitung gepumpt werden kann.

Die physiologische Unbedenklichkeit (Hygiene-Institut Gelsenkrichen) ist eine wesentliche Voraussetzung.

Ein geeigneter PU-Schaum ist beispielsweise wie folgt aufgebaut:     Polyol        vom Typ 100 GT
Toluidindiisocyanat     12 GT

Die Komponente A, der Mörtel, besteht aus einem genau abgestimmten System. Eine sehr wichtige Komponente in diesem System ist das nur in sehr geringen Mengen verwendete Diaminphosphoniumsalz. Hier kommt insbesondere das Natriumsalz der Diethylentriamin-penta-methylen-Phosphonsäure der Formel

$R - PO (OX)_{2\ m}$
$R$ = Hydroxoalkanrest
$H_2N (CH_2-CH_2)-NH_m-(CH_2)_n$
$m = 1 - 5$
$n = 1 - 6$
$X = Na, k; Ca, Ba, Al; Zn$

in Frage.

Die Korngröße der in dem Mörtel A enthaltenen Bestandteile entspricht den üblicherweise in Mörteln verwendeten Korngrößen und liegt in einem Bereich von 0 bis 1,2 mm und von 0 bis 0,6 mm oder von = bis 4 mm.

Das Epoxyharz in der Komponente B stellt eine Zusammensetzung aus verschiedenen, in Epoxyharz-Systemen an sich bekannten Komponenten dar. Ein Epoxyharz vom Bisphenol-A-Typ mit einem Epoxy-Äquivalent von 180 bis 190 ist als Hauptkomponente darin enthalten. Daneben ist ein Epoxyharz auf Basis von Vinylglycidylether mit einem Epoxidwert von 0,54 als Verdünnungsmittel enthalten, und zwar in einer Menge von 15 bis 20 Gew.-%, wobei die optimale Menge bei etwa 19,5 Gew.-% liegt.

Trikresylphosphit wirkt als weiteres Verdünnungsmittel. Trikresylphopshit ist ein reaktiver Weichmacher, der mit dem Diaminphosphoniumsalz in der Komponente A reaktiv ist.

Der Epoxidharzhärter besteht aus einem herkömmlichen Gemisch. Ein bevorzugtes Gemisch baut sich beispielsweise auf aus

37 Gew.-% Benzylalkohol
5 Gew.-% Salicylsäure
26 Gew.-% Isophorondiamin
15,5 Gew.-% Trimethylhexamethylendiamin
16,5 Gew.-% eines Epoxyharzes vom Bisphenol-A-Typ.

In dem Gemisch aus A, B und gegebenenfalls C ist Wasser in einer Menge von 8 bis 16 Gew.-Teilen, bezogen auf 100 Gew.-Teile der Komponenten A und B, enthalten. Die Menge des Wassers wird so gewählt, daß sie ausreicht für die hydraulische Aushärtung der Komponente A.

Es versteht sich, daß die Komponenten A, B und C und die notwendige Menge an Wasser nicht von vornherein als Gemisch vorliegen. Vielmehr wird diese Mischung am Ort des Einsatzes hergestellt. Hierzu kann man die jeweiligen Komponenten über Schlauchleitungen einem Mischventil zuführen, in dem mittels Preßluft eine Verwirbelung und Vermischung unter Ausbildung eines Gels stattfindet. Dieses Gel wird dann auf die zu sanierenden Innenflächen von Kanälen oder Rohrleitungen aufgesprüht bzw. gespritzt.

Die Auftragdicke hängt dabei von der Art der zu sanierenden Wandung ab. Sie liegt im allgemeinen bei 20 bis 35 mm, wobei jedoch größere Dicken, insbesondere bei der Mitverwendung eines PU-Schaums, bis zu etwa 350 mm möglich sind. Dabei ist es möglich, die gewünschte Schichtdicke in einem einzigen Auftrag oder auch durch mehrmaliges Auftragen, gegebenenfalls unter Zwischentrocknung und Härtung der vorher aufgetragenen Überzüge, zu erzielen.

Eine bevorzugte, in der Praxis bewährte Zusammensetzung, die maschinell verspritzt werden kann, ist wie folgt zusammengesetzt:

|  |  |  |  |  |  |
|---|---|---|---|---|---|
| 1. A | 100 GT | | 2. A | 100 GT | |
| B | 100 GT | | B | 100 GT | |
| | | | C | 10–50 GT | |

und enthält 16 Teile Wasser.

Die nachfolgenden Beispiele beschreiben die Erfindung.

Weitere Einzelheiten, Merkmale und Vorteile der Erfindung ergeben sich aus der nachfolgenden Beschreibung von Ausführungsbeispielen, teilweise anhand der beigefügten Zeichnungen. Es zeigt:

Fig. 1 eine schematische Gesamtansicht eines Kanalsanierungssystems,

Fig. 2 eine perspektivische Ansicht eines mit einem Arbeitskopf versehenen Sanierungswagens,

Fig. 3 einen Sanierungswagen gemäß Fig. 3, jedoch mit einem mit anderen Bearbeitungswerkzeugen bestückten Arbeitskopf,

Fig. 4 eine weitere perspektivische Ansicht des Sanierungswagens mit anderen, am Arbeitskopf angebrachten Bearbeitungswerkzeugen, und

Fig. 5 eine schematische, vergrößerte Darstellung einer die Schichtdicke erfassenden und steuernden Andrückrolle.

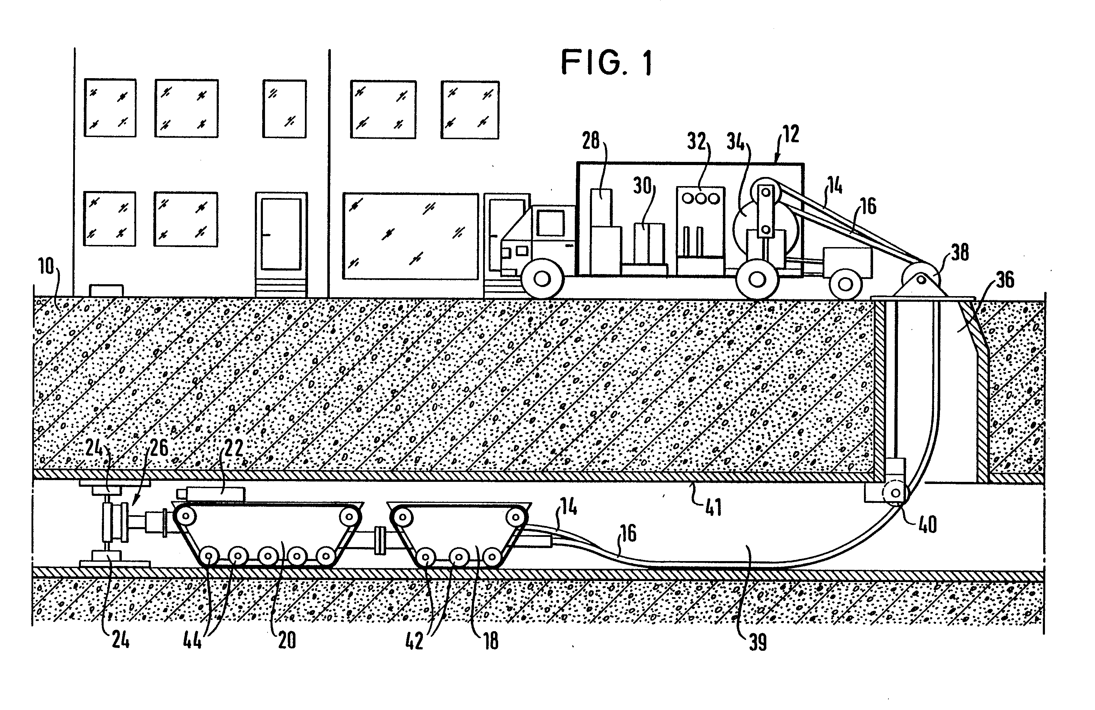

Das in Fig. 1 dargestellte Sanierungssystem besteht im wesentlichen aus einem auf dem Erdboden (10) stehenden Bedienungs-und Gerätefahrzeug (12), zwei Materialzuführschläuchen (14 und 16), einem Mischwagen (18), der an einem Bearbeitungswagen (20) angekoppelt ist, auf dem eine Fernsehkamera (22) befestigt ist, und einem mit Bearbeitungswerkzeugen (24) bestückten Arbeitskopf (26).

Im Bedienungs-und Gerätewagen (12) befinden sich eine Steuer-und Überwachungseinheit (28), ein Tank (30) für Chemikalien, eine Dosier-und Fördereinrichtung (32) und eine Haspel (34) für die Überwachungs-und Versorgungsleitungen.

Die Materialzuführschläuche (14 und 16) laufen am Einlaß eines Kanalschachtes (36) über eine Schachtumlenkrolle (38) und am unteren Ende, d.h. im Übergangsbereich zwischen Kanalschacht (36) und Kanal (39), um eine Schachtumlenkrolle (40). Der Mischwagen (18) ist auf Rädern (42) und der Sanierungswagen (20) auf Rädern (44) auf der Kanalsohle verfahrbar, wobei allerdings auch die Möglichkeit besteht, eine symmetrische Dreifachabstützung an der Kanalinnenwand vorzunehmen, und zwar entweder durch Räder oder durch Gleitschienen.

5

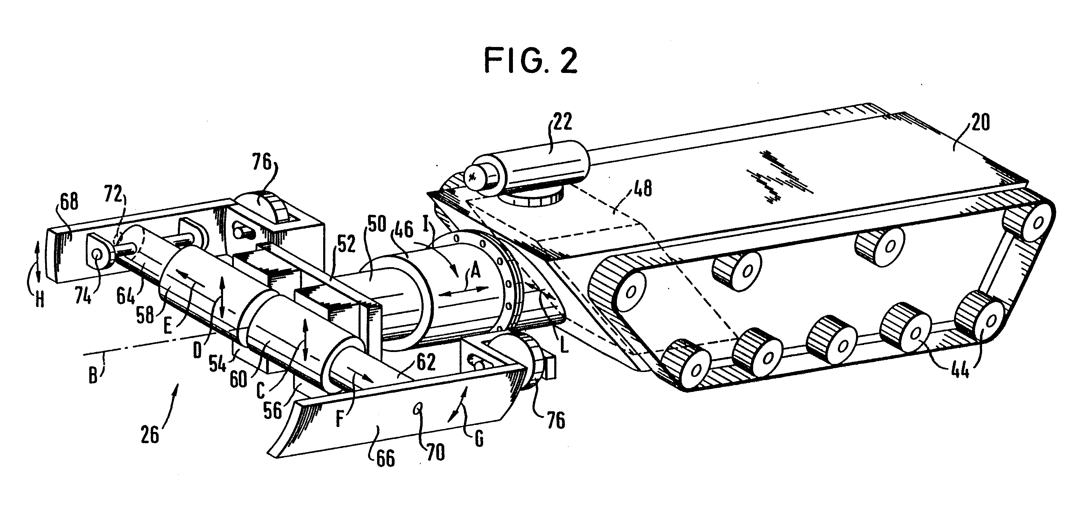

Der in Fig. 2 dargestellte Sanierungswagen (20) weist an seinem vorderen Ende einen Zylinder (46) auf, der entsprechend dem Pfeil (A) aus-und einfahrbar ist. Der Zylinder (46) ist durch einen Motor (48) um die Achse (B) drehbar. Die Kolbenstange (50) des Zylinders (46) trägt an seinem vorderen Ende den Arbeitskopf (26). Dieser Arbeitskopf umfaßt eine Stützplatte (52), an der zwei Motoren (54 und 56) angebracht sind. Diese Motoren bewegen in Richtung der Doppelpfeile (C und D) Zylinder (58 und 60), die miteinander fluchtend radial ausgerichtet sind und in Richtung der Pfeile (E und F) ein-bzw. ausfahrbar sind. An den zugehörigen Kolbenstangen (62 und 64) der beiden Zylinder (60 und 58) befindet sich eine Auftrags-und Glättspachtel (66 bzw. 68). Diese Glättspachtel (66 und 68) ist mit einer Austrittsdüse (70 bzw. 72) versehen, die mit einem nicht-dargestellten Kanal verbunden ist. Dieser Kanal verläuft mittig durch die Zylinder (58 und 60) sowie den Zylinder (50) und von dort zu einem Versorgungsschlauch für das Sanierungsmaterial.

Die Auftrags-und Glättspachtel (66 und 68) ist entsprechend dem Doppelpfeil (G bzw. H) um eine Achse (74) frei schwenkbar, die parallel zur Längsachse (B) ausgerichtet ist, um so eine Anpassung an die Kanalinnenwandung (41) vornehmen zu können. Dabei ist festzustellen, daß die Außenkontur der Auftrags-und Glättspachtel (66 und 68) an die Krümmung der Kanalinnenwandung (41) angepaßt ist.

Durch die vielfachen Bewegungsmöglichkeiten der einzelnen Zylinder und Bearbeitungswerkzeuge ist eine sehr genaue und vielseitige Anpassung an die jeweiligen Verhältnisse möglich, um so einen kontinuierlichen Auftrag des Sanierungsmaterials gewährleisten zu können.

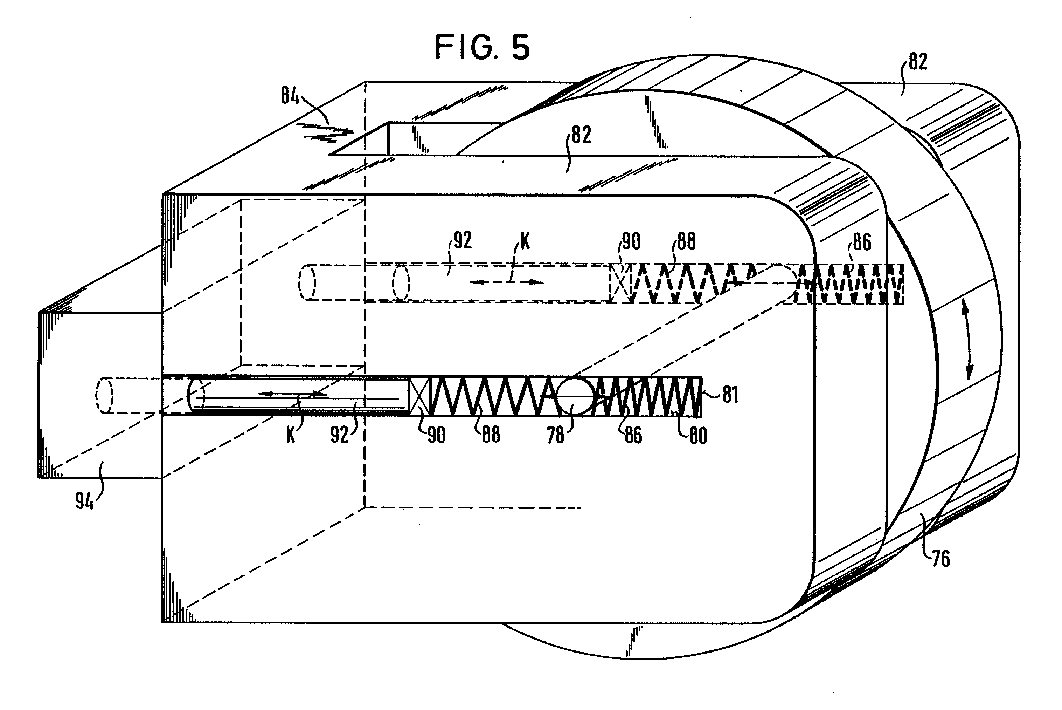

An der Auftrags-und Glättspachtel (66 und 68) befindet sich am rückseitigen Ende eine Andrückrolle (76), die auf dem aufgetragenen bzw. aufgespachtelten Sanierungsmaterial zur Anlage kommt, um so die aufgetragene Schichtdicke im Zusammenhang mit einem Sensor zu bestimmen, der sich im Zusammenhang mit der Mechanik der Andrückrolle deutlicher aus Fig. 5 ergibt. Die Rolle (76) ist um eine Achse drehbar, die ebenfalls parallel zur Längsachse B ausgerichtet ist. Der gesamte Arbeitskopf (26) ist um die Achse (B) entsprechend dem Pfeil (I) drehbar, wenn der Motor (48) betätigt wird.

Die in Fig. 5 dargestellte Andrückrolle (76) ist um eine Achse (78) frei drehbar. Die Achse (78) liegt in Längsschlitzen (80) von Gabeln (82) eines gabelförmigen Halters (84). Beidseits der Achse (78) befinden sich in diesem Schlitz Federn (86 und 88). Die Feder (86) liegt zwischen der Schlitzendwand (81) und der Achse (78), und die Feder (88) zwischen der Achse (78) und einer Endplatte (90) eines in Richtung des Doppelpfeiles (K) beweglichen Stößels (92). Dieser Stößel (92) steht mit einem Sensorkasten (94) in Verbindung, und dieser Sensor wiederum mit dem gesamten Steuer-und Antriebssystem für die Bearbeitungswerkzeuge, und insbesondere für die Sanierungsmaterialzufuhr und die Auftrags-und Glättspachtel.

Nachfolgend soll nun das Sanierungsverfahren beschrieben werden.

Der Sanierungswagen (20) wird entsprechend der Darstellung in Fig. 1 in den Kanal (39) eingebracht und dann langsam den Kanal entlang vorwärtsbewegt. Dabei dreht sich der Arbeitskopf (26) entsprechend dem Pfeil (I), wobei die Auftrags-und Glättspachteln (66 und 68) sich entlang der Kanalinnenwandung (41) bewegen, und zwar spiralförmig derart, daß dabei kontinuierlich und gleichförmig Sanierungsmaterial besonderer Art auf die Kanalinnenwandung (41) aufgespachtelt und geglättet wird, so daß nach dem Aushärten des Sanierungsmaterials ein homogenes und hochfestes "Rohr im Rohr" entsteht, welches bei geringerem Arbeitsaufwand eine Kanalsanierung vornimmt, die einer Neuverlegung eines Rohres im Prinzip gleichkommt.

Die Andrückrolle (76) bewegt sich freidrehend mit dem Arbeitskopf und tastet dabei die aufgetragene Schichtdicke ab. Im Zusammenhang mit den Sensoren läßt sich nun der Abstand zwischen Rolle und Spachtel manuell oder CNC-gesteuert verändern, und zwar entsprechend der gewünschten Auftragsstärke. Von Anfang an und während des gesamten Arbeitsvorganges ist die sensorgesteuerte Rolle ein sehr wichtiges Teil. Zu Beginn eines Arbeitsvorganges wird die Rolle an der vorhandenen, zu sanierenden Kanalrohrwandung angepaßt und an dieser entlanggeführt. Die so abgetasteten Daten werden im Speicher der CNC-Steuerung übernommen. Nun wird an der Rolle die gewünschte Beschichtungsstärke eingestellt. Der Abstand zwischen Rolle und Spachtel zur Rohrwandung ist dann die Auftragsstärke. Nach Beendigung dieses Vorganges wird die Rolle erneut an die Rohrwandung angepreßt und der Vorgang wiederum ohne Material wiederholt. Die abermals erfaßten Daten werden wieder im Speicher der CNC-Steuerung übernommen und gespeichert. Nun wird über einen angeschlossenen Plotter ein Ausdruck der Draufsicht ausgedruckt. Anhand dieses Ausdruckes läßt sich nun überprüfen, ob die aufzubringende Beschichtung gleichmäßig aufgetragen werden kann. Der gesamte Arbeitsvorgang setzt voraus, daß sich der Arbeitskopf auf der Mittelachse des zu sanierenden Kanalrohres befindet. Zur Ermittlung der Mittelachse dienen die verschiedenen erläuterten Antriebssysteme.

Wenn alle Daten endgültig überprüft sind und mit den vorgegebenen Daten übereinstimmen, dann kann der eigentliche Beschichtungsvorgang begonnen werden.

Je nach den Erfordernissen können an dem Arbeitskopf drei Spachteln und eine Vorspachtel montiert werden. Der gesamte Arbeitsvorgang wird alle vier Meter kontrolliert, indem über den im Fahrzeug oberirdisch befindlichen Plotter ein Ausdruck gestartet wird, an dem dann die Gleichmäßigkeit der Beschichtungsstärke überprüft werden kann. Sollte sich wider Erwarten an dem zu sanierenden Kanal eine Deformierung befinden, bzw. sich der Querschnitt des Kanals verändern, so entsteht an der Andrückrolle ein höherer Druck. Die Rolle wird dann automatisch nach hinten gedrückt. Somit verändert sich der vorgegebene Abstand zwischen Rolle und Sensor. Automatisch wird der Beschichtungsvorgang unterbrochen. Nun muß die Maschine vom Fahrzeug oberirdisch manuell durch den veränderten Querschnitt gesteuert werden. Sobald der Kanal wieder seinen ursprünglichen Querschnitt erreicht hat, kann die Maschine wieder automatisch mit dem Beschichtungsvorgang beginnen.

Durch die bereits erwähnte Anordnung der einzelnen Zylinder und Motoren werden 12 Freiheitsgrade erreicht, um eine optimale Einstellung des Sanierungswagens und der Bearbeitungswerkzeuge vornehmen zu können.

Anstatt der beschriebenen hydraulischen oder pneumatischen Zylinder können natürlich andere Antriebsaggregate eingesetzt werden. Ebenso kann die Andrückrolle als Folgeglied auch eine andere technisch äquivalente Gestalt haben, wie beispielsweise eine Kugel. Auch besteht die Möglichkeit, daß nur die Austrittsdüse (70) vorgesehen ist und nicht die Austrittsdüse (72), wobei dann die Auftrags-und Glättspachtel (66) ein Vorglätten und die Spachtel (68) ein Nachglätten vollzieht.

Der zuvor beschriebene Beschichtungsvorgang ist nicht immer sofort durchführbar, da möglicherweise Schäden im zu sanierenden Kanalrohr vorbearbeitet werden müssen.

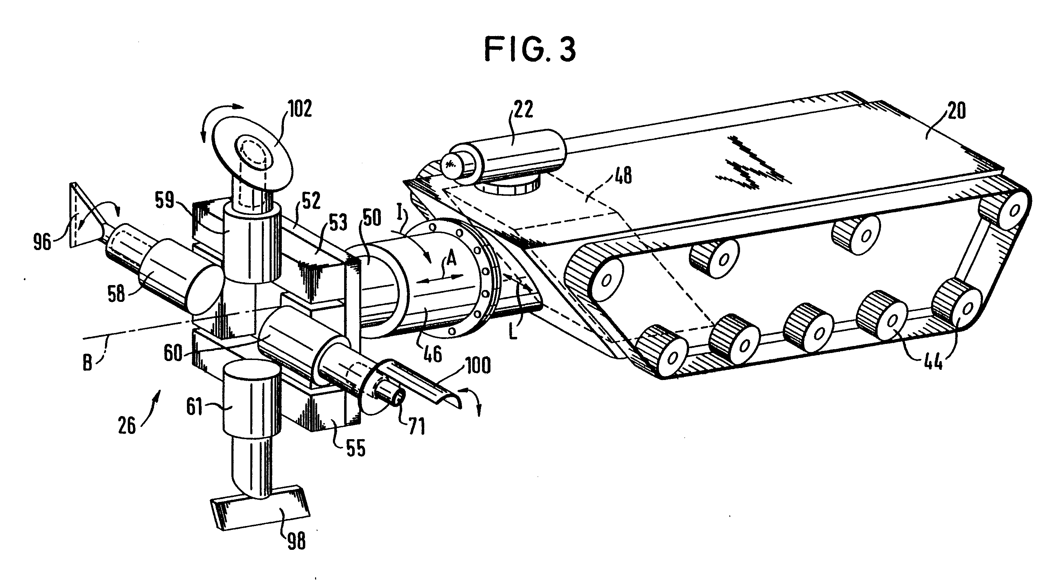

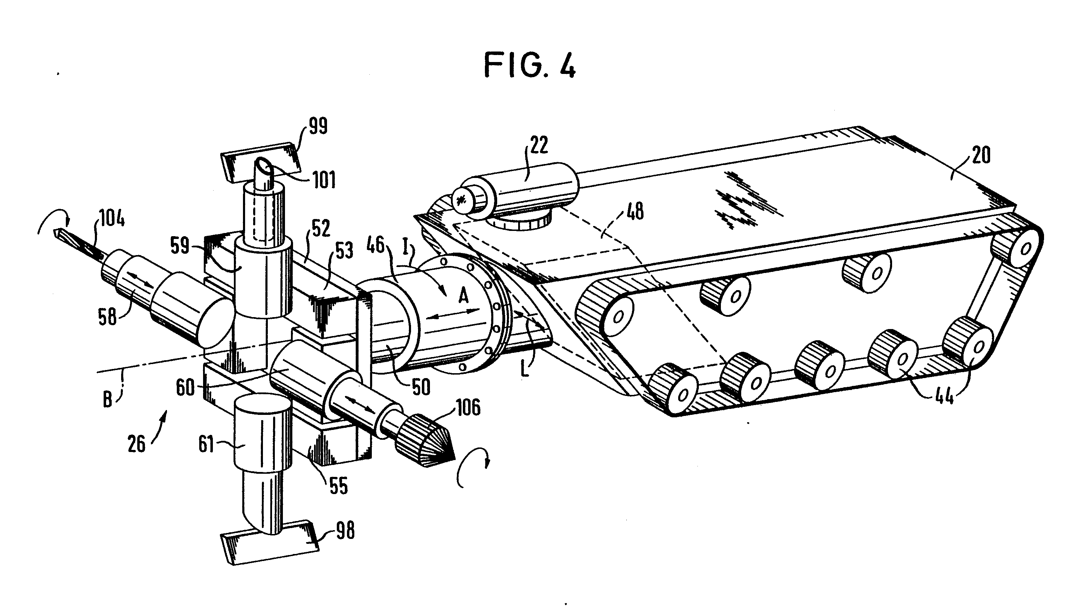

Fig. 3 und 4 zeigen eine Version des Sanierungswagens mit einem Arbeitskopf (26), der mit vier Bearbeitungswerkzeugen bestückt ist, und zwar einer Reinigungsdüse (96), einer Flachspachtel (98), einer Drehspachtel (100) und einer Scheibenspachtel (102), die symmetrisch um die Achse (B) angeordnet sind, und zwar ähnlich wie die Auftrags-und Glättspachteln (66 und 68) in Fig. 2, fluchtend diametral jeweils entgegengesetzt. Den in Fig. 3 dargestellten Bearbeitungswerkzeugen (98 und 102) sind Zylinder (59 und 61) zugeordnet, die an Motoren (53 und 55) angebracht sind. Die Bewegungsfreiheitsgrade für diese Bearbeitungswerkzeuge und auch für die Bearbeitungswerkzeuge (96 und 100) sind gleich den Bewegungsfreiheitsgraden der Auftrags-und Glättspachteln (66 und 68) der Fig. 2.

Der Drehspachtel (100) ist einer Austrittsdüse (71) für Sanierungsmaterial zugeordnet.

Der Sanierungswagen (20) gemäß Fig. 4 ist weitgehend dem der Fig. 3 ähnlich, jedoch sind hier zwei andere Bearbeitungswerkzeuge vorgesehen, und zwar eine Flachspachtel (99) mit einer Austrittsdüse (101), ein Bohrer (104) und ein Fräser (106). Die angesprochenen Freiheitsgrade für die Bewegungen der einzelnen Teile und insbesondere des Arbeitskopfes und der Bearbeitungswerkzeuge sind ähnlich wie dies bereits im Zusammenhang mit Fig. 2 beschrieben worden ist. Allerdings ist entsprechend dem Doppelpfeil (L) der Zylinder (46) auch noch bevorzugt senkrecht zur Längsachse (B) bewegbar, was ebenfalls über den Motor (48) erfolgen kann. Sofern erforderlich, sind den einzelnen Bearbeitungswerkzeugen Sanierungsmaterial-Zuführleitungen zugeordnet. So ist beispielsweise der Bohrer (104) als Hohlbohrer ausgebildet, so daß durch diesen Hohlbohrer auf an sich bekannte Weise Sanierungsmaterial durch ein gebohrtes Loch zugeführt werden kann.

Der Funktionsablauf ist so, daß der Sanierungswagen, über die Fernsehkamera (22) gesteuert, an die verschiedenen Schadstellen herangefahren wird und dann die einzelnen Bearbeitungswerkzeuge genau an die bestimmte Stelle zugeführt und eingesetzt werden. Mit dem Bearbeitungswerkzeug (99) kann über die Austrittsdüse (101) Sanierungsmaterial, beispielsweise einem in den Kanal einmündenden Anschluß, zugeführt werden, um diesen ggf. abzudichten. Die Austrittsdüse (101) wird in Position gebracht und dann der zugehörige Zylinder (59) ausgefahren, so daß die Austrittsdüse (101) direkt an die gewünschte Stelle gebracht wird. Vom Fahrzeug wird nun oberirdisch Sanierungs-bzw. Dichtungsmaterial zur Düse gebracht und auf die gewünschte Stelle, beispielsweise einen Ausbruch, aufgetragen. Dabei wird die Austrittsdüse um den Einlauf des Anschlusses herumgeführt und somit eingedichtet. Durch die hinter der Düse befindliche Glättspachtel (99) wird das aufgetragene Material nachgeglättet.

Zur Bearbeitung von Rissen in der Rohrwandung dient der Fräser (106). Der Arbeitskopf wird an die Rißstelle herangefahren. Zur genauen Positionierung dient dabei die Fernsehkamera (22). Durch das Ausfahren des zugehörigen Zylinders (60) wird der Fräser (106) gegen den Riß gedrückt. Der Fräser wird nun gedreht und auf dem Riß entlanggefahren und somit aufgefräst. Die verschiedenen, angesprochenen Bewegungsfreiheitsgrade des Werkzeuges und des Arbeitskopfes ermöglichen dies automatisch auf einfache Weise. Nachdem der Fräsvorgang durchgeführt worden ist, wird über die Austrittsdüse (101) Material aufgetragen und mit der Spachtel (99) verstrichen und geglättet.

7

Zur Beschichtung von größeren Löchern oder Kanalbrüchen dient wiederum die Austrittsdüse (101), wobei die Spachtel (99) nur zum Vorglätten dient. Zum endgültigen Glätten dient hier die diametral entgegengesetzt angeordnete Spachtel (98).

Zum Abdichten von Wassereinbrüchen an Rohrmuffen (Rohrverbindungen) oder Rissen und Löchern dient der Bohrer (104) über den Zylinder (58), in dem sich ein Drehmotor befindet, über den der Hohlbohrer (104) gedreht wird. Durch den Zylinder sowie durch den Motor verläuft eine hier nicht dargestellte Materialzuführungsleitung bis zum Hohlbohrer (104). Der Zylinder (58) wird, gesteuert durch die Fernsehkamera (22), in die geeignete Position gefahren. Der Zylinder (58) wird mit dem Hohlbohrer (104) gegen die Rohrwandung gedrückt. Dadurch wird in die Rohrwandung ein Loch gebohrt. Nach Beendigung des Bohrvorganges wird ein Dichtungsmaterial (Zweikomponenten-Gel), das sich im Fahrzeug oberirdisch befindet, über eine Pumpe durch die Förderleitung zum Sanierungswagen geleitet und durch den Hohlbohrer in das Erdreich gepreßt. Dieser Vorgang wird so lange vollzogen, bis der Wassereinbruch abgedichtet ist. Nach Beendigung des Abdichtvorganges wird über die Austrittsdüse (101) die Bohrstelle verschlossen.

Nachfolgend wird ein Anwendungsbeispiel beschrieben.

Beispiel

Bei einem Kanalrohr mit einem NW = 300, PVC, wurde zur Abdichtung auf eine Länge von 15 m mit einem Gemisch aus

| | |
|---|---|
| Portlandzement 45 F | 33 GT |
| Quarzsand 0-0,6mm | 59,49 GT |
| Elektrofilterasche | 1 GT |
| Natriumaluminat | 0,8 GT |
| Trassmehl | 1,0 GT |
| Salicylsäure | 0,20 GT |
| Diaminphosphoniumsalz | 0,005 GT |
| Styrol-Acrylat-Copolymer | 2,0 GT |
| Ethylen-Vinylacetat-Copolymer | 1,5 GT |
| Aluminiumpulver | 0,0018 GT |

in bestimmungsgemäßer Weise mit 0,174 l Wasser angerührt und in die Sanierungsmaschine gepumpt.

In gleicher Weise wurde die Komponente B (Epoxidharz) in einer Zusammensetzung von

| | |
|---|---|
| Bisphenol A | 80 GT |
| Phenylglycidylether | 15,0 GT |
| Trikresylphosphat | 5,0 GT |

in die Vormischkammer der Sanierungsmaschine gepumpt. Getrennt hiervon wurde der Härter für das Epoxidharz bis zur Vormischkammer transportiert. Der Härter hatte die Zusammensetzung:

| | |
|---|---|
| Isophorondiamin | 26,0 GT |
| Trimethylhexamethylendiamin | 15,5 GT |
| Benzylalkohol | 37 GT |
| Salicylsäure | 5 GT |
| Bisphenol A | 165 GT |

Gesteuert wurde die Menge so, daß in der Vormischkammer stets eine Menge von 2 GT Epoxidharz und 1 GT Härter ankam. Nach der Vormischung dieses EP-Harzes mit dem Härter wurde das Material mit der Komponente A gemischt, in einer 2. Mischkammer.

Das aus der Düse austretende Material wurde untersucht und wies nach 7 Tagen folgende technische Kenndaten auf:

| | | |
|---|---|---|
| Trockenrohdichte | 1219 kg/m$^3$ = | $_{tr.}$ |
| Biegezugfestigkeit | 21 MPa = | $\beta_{BZ}$ |
| Druckfestigkeit | 26 MPa = | $\beta_D$ |
| Stat. -Modul | 2200 MPa = | |
| Haftzugfestigkeit | 2,5 MPa = | $\beta_H$ |

8

Diese ermittelten Werte weisen in allen Punkten um mindestens 100-200% bessere Wertigkeiten auf als alle bisher auf dem Markt befindlichen, für diesen Einsatzzweck gedachten Produkte. Das Verhältnis von $\beta_{BZ}/\beta_D$ ist nahezu 1. Zusammen mit dem ermittelten Stat.-Modul von 2200 MPa läßt sich jede Statik neu einbringen. Die hohe Klebkraft, gekennzeichnet durch $\beta_H = 2,5$ MPa garantiert für eine gute Haftung, ohne daß es zur Rißbildung kommt.

**Ansprüche**

1. Verfahren zum Sanieren oder zum Beschichten bei der Herstellung einer nicht-begehbaren Rohrleitung durch Aufbringen eines Sanierungsmaterials oder Beschichtungsmaterials, dadurch **gekennzeichnet,** daß auf die gesamte Rohrleitungsinnenwandfläche sukzessive und durch einen kontinuerlichen Vorgang das Material gleichmäßig auf die Rohrleitungsinnenwandfläche aufgespachtelt und geglättet wird.

2. Verfahren nach Anspruch 1, dadurch **gekennzeichnet,** daß das Material spiralförmig aufgespachtelt wird.

3. Vorrichtung zum Durchführen des Verfahrens nach den Ansprüchen 1 und/oder 2, mit einem in der Rohrleitung (39) ferngesteuert verfahrbaren, einen Arbeitskopf (26) und Zentriermittel aufweisenden Sanierungs-oder Beschichtungswagen (20), dadurch **gekennzeichnet,** daß am Arbeitskopf (26) eine um die Rohrleitungslängsachse (B) kontinuierlich drehbare Austrittsdüse (70; 72) für das Material angeordnet und dieser Austrittsdüse eine Auftragsspachtel (66; 68) zugeordnet ist, und daß zusätzlich eine Glättspachtel vorgesehen ist.

4. Vorrichtung nach Anspruch 3, dadurch **gekennzeichnet,** daß um die Austrittsdüse (70; 72) eine Auftragsspachtel (66, 68) angeordnet ist, die ggf. eine Glättspachtel ist und die hinsichtlich ihrer Kontur an die Krümmung der Rohrleitungsinnenwandfläche (41) angepaßt ist.

5. Vorrichtung nach Anspruch 3 oder 4, dadurch **gekennzeichnet,** daß die Auftragsspachtel und/oder Glättspachtel (66, 68) einer auf die aufgespachtelte und geglättete Auskleidung aufliegende Andrückrolle (76) zugeordnet ist, die mit einem Sensor (94) zusammenwirkt und die den Auftrag des Sanierungsmaterials und somit eine gleichmäßige Schichtdicke steuert.

6. Vorrichtung nach den Ansprüchen 4 und 5, dadurch **gekennzeichnet,** daß eine Vielzahl von Bearbeitungswerkzeugen (96, 98, 100, 102; 98, 99, 104, 106) am Arbeitskopf (26) angeordnet ist.

7. Vorrichtung nach Anspruch 6, dadurch **gekennzeichnet,** daß die Bearbeitungswerkzeuge für Einstellungszwecke radial zur Rohrleitungslängsachse (B) bewegbar sind.

8. Vorrichtung nach Anspruch 6 oder 7, dadurch **gekennzeichnet,** daß die Bearbeitungswerkzeuge für Einstellungszwecke in zwei zueinander senkrechten Richtungen radial bewegbar sind.

9. Vorrichtung nach einem der Ansprüche 6 bis 8, dadurch **gekennzeichnet,** daß der Arbeitskopf (26) für Einstellungszwecke auf der Rohrleitungslängsachse (B) relativ zum Sanierungs-oder Beschichtungswagen (20) bewegbar ist.

10. Vorrichtung nach einem der Ansprüche 6 bis 9, dadurch **gekennzeichnet,** daß der Arbeitskopf (26) für Einstellungszwecke relativ zum Sanierungs-oder Beschichtungswagen (20) drehbar ist.

11. Vorrichtung nach einem der Ansprüche 6 bis 10, dadurch **gekennzeichnet,** daß der Arbeitskopf (26) für Einstellungszwecke senkrecht zur Rohrleitungslängsachse (B) relativ zum Sanierungs-oder Beschichtungswagen (20) bewegbar ist.

12. Sanierungs-oder Beschichtungsmaterial insbesondere zur Verwendung bei dem genannten Verfahren und/oder der genannten Vorrichtung nach den Ansprüchen 1 bis 11 und zum Sanieren einer Kanal-Rohrleitung oder auch zum Innenbeschichten von Rohren, insbesondere aus Beton oder Steinzeug oder HDPE (Polyethylen) oder PVD oder Metalle aller Art bereits bei der Herstellung derselben, dadurch **gekennzeichnet** daß es aus

A) Mörtel oder

B) Epoxyharz oder

C) PU-Schaum oder

D) einer jeweiligen Mischung dieser Materialien besteht, wobei diese Materialien die folgende Zusammensetzung haben:

(A) Mörtel aus:

Portlandzement mit einem $C_3A$-Gehalt von 8%     30 bis 40 Gew.-Teile

Quarzsand     30 bis 60 Gew.-Teile

Elektrofilterasche     .. bis .. Gew.-Teile

Natriumaluminat     0,05 bis 0,3 Gew.-Teile

Trassmehl     0,05 bis 2,0 Gew.-Teile

Salicylsäure    0,02 bis 0,2 Gew.-Teile
Diaminphosphoniumsalz    0,005 bis 0,02 Gew.-Teile
Styrol-Acrylat-Copolymer    0,1 bis 2,0 Gew.-Teile
Ethylen-Vinylacetat-Copolymer (EVA)    0,6 bis 1,5 Gew.-Teile
Aluminiumpulver    0,001 bis 0,02 Gew.-Teile
  (B) Epoxyharz-Zusammensetzung vom Bisphenol A-Typ mit einem Epoxyäquivalent von 180 bis 190
    70 bis 80 Gew.-%
Epoxyharz auf Basis von Phenylglycidylether mit einem Epoxydwert von 0,54    15 bis 20 Gew.-%
Trikresylphosphit    4,0 bis 6,0%
Epoxydharzhärter    45 bis 55%

und
  (C) einem PU-Schaum,
wobei die Komponente A in einer Menge von    30 bis 70 Gew.-Teile,
die Komponente B in einer Menge von    70 bis 30 Gew.-Teile und
die Komponente C in einer Menge von    1 bis 30 Gew.-Teile

# FIG. 1

FIG. 2

# FIG. 3

0 263 505

FIG. 4

# FIG. 5

Europäisches Patentamt

EUROPÄISCHER RECHERCHENBERICHT

Nummer der Anmeldung

EP 87 11 4620

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 133 497 (BRITISH GAS CORP.) * insgesamt * | 1 | F 16 L 55/16 |
| A | | 2,3,12 | |
| A | AT-B- 359 793 (WIESER) * Seite 2, Zeilen 1-8; Ansprüche; Figuren * | 1,2,12 | |
| A | WO-A-8 604 975 (KUNSTSTOFF - TECHNIK AG HIMMLER) * Zusammenfassung; Seite 6, Zeile 23 - Seite 7, Zeile 12; Ansprüche 1, 4; Figur 1 * | 1,7-11 | |
| A | GB-A-2 081 281 (HAYWARD BAKER CO.) * Zusammenfassung; Ansprüche 2, 3 * | 1,12 | |
| A | EP-A-0 145 654 (CIBA-GEIGY) * Zusammenfassung; Seite 1, Zeilen 6-22; Seite 17, Tabelle 1 * | 1,12 | |
| A | DE-A-3 000 917 (KANKYO KAIHATSU et al.) * Anspruch 1; Seite 24, Zeilen 20-27; Figur 3 * | 1,6,12 | RECHERCHIERTE SACHGEBIETE (Int. Cl.4)  F 16 L 55/00 |
| A | US-A-3 830 260 (BAVIELLO) * Zusammenfassung; Figur 1 * | 1,4 | |
| A | US-A-4 155 957 (SASAYAMA) | | |

Der vorliegende Recherchenbericht wurde für alle Patentansprüche erstellt

| Recherchenort | Abschlußdatum der Recherche | Prüfer |
|---|---|---|
| BERLIN | 16-12-1987 | SCHAEFFLER C.A.A. |